Europäisches Patentamt

European Patent Office

Office européen des brevets

(19)

(11) Publication number: **0 290 408 B1**

(12) **EUROPEAN PATENT SPECIFICATION**

(45) Date of publication of patent specification: **16.09.92**  (51) Int. Cl.⁵: **B60N 2/42**, B60R 21/00

(21) Application number: **88850140.0**

(22) Date of filing: **22.04.88**

(54) **Side-collision protection in automotive vehicles.**

(30) Priority: **08.05.87 SE 8701901**

(43) Date of publication of application:
**09.11.88 Bulletin 88/45**

(45) Publication of the grant of the patent:
**16.09.92 Bulletin 92/38**

(84) Designated Contracting States:
**DE FR GB IT SE**

(56) References cited:
**SE-B- 417 183**

(73) Proprietor: **AB VOLVO**
**Assar Gabrielssons väg Torslanda**
**S-405 08 Göteborg(SE)**

(72) Inventor: **Bohlin, Nils**
**Olstorps Gärd**
**S-573 00 Tranäs(SE)**
Inventor: **Carnbring, Göran**
**Spektrumsgatan 38**
**S-421 63 V.Frölunda(SE)**

(74) Representative: **Hellbom, Lars Olof et al**
**H. Albihns Patentbyra AB Box 3137**
**S-103 62 Stockholm(SE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

EP 0 290 408 B1

# Description

The present invention relates to an arrangement for protecting the occupants of an automotive vehicle from injury in the event of a side-on collision, the arrangement comprising first transversally arranged reinforcement elements which are connected to respective vehicle seat bases and which are intended to transfer from a pressure-loaded side of the vehicle chassis or vehicle door to the floor of said vehicle, part of the load acting on the vehicle seat.

It is known, e.g. from Swedish Patent Specification SE-B-417 183 corresponding to the preamble of claim 1, that automobiles in particular can be greatly improved with regard to the protection afforded to the occupants in the event of a side-on collision, by fitting the vehicle seats, at bumper height, with a compressive-load transferring reinforcement tube which subsequent to a given amount of distortion in one side of the vehicle chassis transfers part of the load to the floor of the vehicle and to the opposite side of the chassis. The reinforcement tubes function as counter-pressure devices during the process of said deformation, in conjunction with separate energy absorbing elements in the form of cellular plastic blocks incorporated in the interior of the vehicle doors or the sides of the vehicle chassis, and ensure that this deformation essentially terminates upon contact of said sides of the vehicle chassis with the vehicle occupant, such that the whole mass of the vehicle struck by a colliding vehicle, together with that of the occupant, is thereafter engaged in the absorption of energy upon the subsequent acceleration to a final speed common to both vehicles.

In the case of the majority of conventional automobiles equipped with separate front seats and an intermediate center console, the center console and the seats are both provided with extra strong floor attachments, which allow extra large lateral loads to be transferred to the floor of the vehicle. The center console is also provided with transverse tubular reinforcements which form bridges from the tubular reinforcements of one seat to the tubular reinforcements of the other seat.

The provision of transverse tubular reinforcements in the forward part of the center console presents a problem in the case of many automobile models, and is at times quite impossible, due to the fact that the space available is not sufficient to accommodate at the same time the hand-brake lever and associated mechanism, it being desired in the majority of cases to position the hand-brake lever and associated mechanism in the center console behind the gear lever or gear selector.

The object of the present invention is to eliminate the need of transverse tubular reinforcements in the center console in an arrangement of the kind described in the introduction, while retaining the ability of the known side-collision protector to transfer very high loads from a vehicle seat to the vehicle floor.

This is achieved in accordance with the invention in that at least one of said first transversally arranged reinforcement elements on the inward side of the seat is connected to a second reinforcement element which extends diagonally from the inner end of said first reinforcement element to an anchoring point in the vehicle floor at or in the vicinity of the outside of the seat.

Such a tension-load transferring second reinforcement element can be given small dimensions and low weight and still be capable of transferring large forces to the floor of the vehicle. It can also be configured such as to enable the seat to be adjusted to normal height positions and leg-room positions. By anchoring the inwardly located end of the element as close to the inward side of the seat as possible and the outwardly located end to the floor close to the side of the vehicle chassis, there is obtained between said second reinforcement element and said first transversally arranged reinforcement element a small angle which results in that in the event of a side-collision the absolute greatest part of the horizontal compressive force is transferred to the vehicle floor via the tension-force transferring second reinforcement element and that only a minor part of this horizontal force will result in vertical compressive forces on the inner part of the seat base or tension forces in the outer part thereof. The tension-force transferring second reinforcement element may have the form of a steel wire, which, particularly when laid double, is capable of transferring large forces while being able to accompany seat adjustments in the vertical and longitudinal directions both smoothly and comfortably.

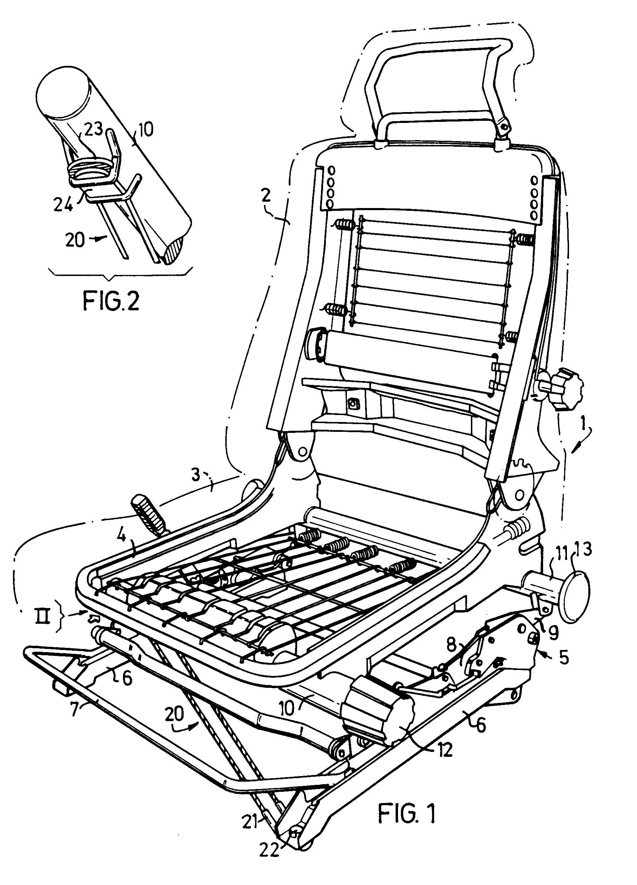

The invention will now be described in more detail with reference to an exemplifying embodiment thereof illustrated in the accompanying drawing, in which Figure 1 is a perspective view of a vehicle seat frame with an associated seat base, and Figure 2 is a detail view seen in the direction of the arrow II in Figure 1.

The seat structure generally referenced 1 in Figure 1 is the seat of an automobile and includes a backrest 2 and a seat 3. The frame 4 of seat 3 is carried by a base 5 which is mounted for linear movement along rails 6, which are bolted firmly to the floor of the vehicle. A stirrup-shaped lever 7 is connected to a catch mechanism (not shown) which secures the seat against linear movement on the rails 6 in a known manner, when the stirrup-shaped lever 7 is not activated. The seat base 5 also includes a mechanism 8 by means of which height adjustments can be made to the seat in relation to the rails 6, this mechanism comprising a forward pair and a rearward pair of lever arms ( 9 ) (only the rear pair of arms is shown). Each pair of lever arms 9 is journalled in respective transverse tubular reinforcement elements 10 and 11 which are connected to the seat frame 4 and which have outer end surfaces 12, 13 which are intended to lie close to the adjacent door or side of the vehicle chassis.

In the event of a side-on collision, the side of the vehicle involved in the collision will be deformed and the compressive force acting thereon will be taken up by the tubular reinforcement elements 10 and 11 and transmitted to the floor of the vehicle, via the pairs of lever arms 9 and the rails 6. The lever arms 9, however, are relatively weak and are also subjected to bending forces and consequently only relatively small loads can be transmitted to the floor via the seat on the impact side of the vehicle. There is used therefore in the prior art embodiment discussed above a tube-reinforced center console which is operative in transferring the load from the tubular reinforcement elements 10, 11 to the floor, via reinforced attachment by means of which the console is secured to the vehicle floor and via the opposite seat structure, and in transferring load to the opposite side of the vehicle chassis.

According to the present invention there is used instead a tension-force transferring second reinforcement element 20 which transfers a major part of the occurrent load to the vehicle floor, via the seat structure on the impact side of the vehicle, thereby eliminating the need of transferring compressive forces via the forward part of the centre console.

In the case of the illustrated embodiment said second reinforcement element 20 comprises a doubled steel-wire, the outer ends of which are firmly pressed into end pieces 21, which is pivotally mounted in the forward attachment 22 of the outer rail 6 on the floor of the vehicle. The inner end of the wire 20 passes in a loop 23 through an attachment 24 on the forwardly located tubular reinforcement element 10. In the event of a side-on collision, the compressive forces acting on the forward tubular reinforcement element 10 will be transmitted to the floor through the wire and the rail attachment 22. The rear tubular reinforcement element 11 is able to transfer its part of the load in a known manner, to the floor of the vehicle, via a tubular reinforcement in the rear part of the centre console and to the opposite side, since the space located in the rear part of the centre fitting is not normally required to accommodate the hand-brake. When this space in the rear part of the centre console is needed to house some other piece of apparatus, a corresponding tension-force transferring wire may, of course, be connected between the rear tubular reinforcement element 11 and the rear floor-attachment of the outer rail 6.

The wire has a length which will enable necessary adjustments to be made to the position of respective seats. The length of the wire is thus such that the wire will at most be fully extended in the extreme position of the respective seats and will present a given amount of slack in positions therebetween. This slack must be taken up before the wire is able to transfer load effectively. However, the distance through which the tubular reinforcement element 10 need move laterally before this slack is taken up is so small as to be negligible in the present context. The embodiment of a tension-force transferring element in the form of a double-wire will enable large forces to be transferred while still allowing the positions of the seats to be adjusted vertically and horizontally. The wire loop 23 is able to slide in the inner attachment 24 to some extent, which together with the pivotability in the outer rail attachment 22 ensures that both parts of the double-wire are loaded uniformly, irrespective of the position of the seat in the longitudinal direction of the vehicle.

## Claims

1. An arrangement for protecting the occupants of an automotive vehicle from injury in the event of a side-collision, comprising first transversally arranged reinforcement elements (10, 11) which are connected to respective vehicle seat bases (4) and which are intended to transfer from a pressure-loaded side of the vehicle chassis or vehicle door to the floor of the vehicle, part of the load that acts on the seat, **characterized in that** at least one of said first transversally arranged reinforcement elements (10, 11) on the inward side of the seat (1) is connected to a second reinforcement element (20) which extends diagonally from the inner end of said first reinforcement element (10) to an anchoring point (22) in the vehicle floor at or in the vicinity of the outward side of the seat.

2. An arrangement according to claim 1 in a vehicle in which the position of the vehicle seats can be adjusted vertically and in the longitudinal direction of the vehicle, **characterized in that** said second reinforcement element (20) is configured and secured such as to permit a limited change in the distance between its seat and floor attachment points (22, 24) when adjusting the positions of the seats.

3. An arrangement according to claim 2, **characterized in that** the second reinforcement element (20) includes an elongated flexible member, e.g. a wire, the length of which is adapted to the maximum distance between the seat and floor attachments points (22, 24) of the second reinforcement element (20).

4. An arrangement according to claim 3, **characterized in that** said elongated flexible member is a doubled steel wire which extends in a loop (23) around an attachment element (24), which permits a given sliding movement of the wire loop, and the ends of which wire are connected to respective end pieces (21) which are pivotally mounted in respective attachments (22).

**Patentansprüche**

1. Anordnung zum Schutz der Insassen eines Kraftfahrzeuges vor Verletzungen im Falle einer Seitenkollision mit ersten, quer angeordneten Verstärkungselementen (10, 11), die mit den jeweiligen Fahrzeugsitz-Grundgestellen (4) verbunden sind und die dazu bestimmt sind, einen Teil der Belastung, die auf den Sitz einwirkt, von der druckbelasteten Seite der Fahrzeugkarosserie oder der Fahrzeugtür auf den Boden des Fahrzeuges zu übertragen, dadurch **gekennzeichnet,** daß wenigstens eines der Verstärkungselemente (10, 11) an der inneren Seite des Sitzes (1) mit einem zweiten Verstärkungselement (20) verbunden ist, das sich vom inneren Ende des ersten Verstärkungselementes (10) diagonal zu einem Verankerungspunkt (22) an oder in der Nähe der äußeren Seite des Sitzes (1) erstreckt.

2. Anordnung nach Anspruch 1, in einem Kraftfahrzeug, in dem die Stellung der Fahrzeugsitze sowohl höhenmäßig als auch in Längsrichtung des Fahrzeuges verändert werden kann, dadurch **gekennzeichnet,** daß das zweite Verstärkungselement (20) so ausgebildet und befestigt ist, daß eine begrenzte Veränderung des Abstandes zwischen seinen Sitz- und Boden-Befestigungspunkten (22, 24) dann möglich ist, wenn die Stellung der Sitze eingestellt wird.

3. Anordnung nach Anspruch 2, dadurch gekennzeichnet, daß das zweite Verstärkungselement (20) ein längliches, biegsames Teil umfaßt, zum Beispiel einen Draht, dessen Länge an den größtmöglichen Abstand zwischen den Sitz- und Boden-Befestigungspunkten (22,24) des zweiten Verstärkungselementes (20) angepaßt ist.

4. Anordnung nach Anspruch 3, dadurch gekennzeichnet, daß das längliche, biegsame Teil ein doppelter Stahldraht ist, der sich in einer Schleife (23) um ein Befestigungselement (24) herum erstreckt, das eine gegebene Gleitbewegung der Draht-Schleife ermöglicht, wobei die Enden des Drahtes mit jeweiligen Endstücken (21) verbunben sind, die an den jeweiligen Anbringungspunkten schwenkbar befestigt sind.

**Revendications**

1. Agencement de protection des occupants d'un véhicule automobile contre les blessures en cas d'une collision latérale, comprenant des premiers éléments de renfort (10, 11) agencés transversalement qui sont reliés à des embases (4) correspondantes de sièges de véhicule et qui ont pour fonction de transférer une partie de la charge qui agit sur le siège depuis un côté du châssis du véhicule, ou d'une porte du véhicule, soumis à une charge de pression, en direction du plancher du véhicule, caractérisé en ce que au moins un desdits premiers éléments de renfort (10, 11) agencé transversalement sur le côté intérieur du siège (1) est relié à un second élément de renfort (20) qui s'étend en diagonale depuis l'extrémité interne dudit premier élément de renfort (10) jusqu'à un point de fixation (22) sur le plancher du véhicule sur le côté extérieur du siège ou à proximité de ce côté.

2. Agencement selon la revendication 1 pour un véhicule dans lequel la position des sièges du véhicule peut être réglée verticalement et dans la direction longitudinale du véhicule, caractérisé en ce que ledit second élément de renfort (20) est conformé et fixé de manière à permettre une modification limitée de la distance entre ses points de fixation au siège et au plancher (22, 24) lors du réglage des position des sièges.

3. Agencement selon la revendication 2, caractérisé en ce que le second élément de renfort (20) comporte un organe flexible allongé, par example un filin, dont la longueur est adaptée à la distance maximum séparant les points de fixation (22, 24) au siège et au plancher du second élément de renfort (20).

4. Agencement selon le revendication 3, caractérisé en ce que ledit organe flexible allongé est un filin double en acier qui s'étend en formant une boucle (23) autour d'un élément de fixation (24), qui permet un mouvement de glissement limité de la boucle de filin, et dont les extrémités sont reliées à des pièces d'extrémité correspondantes (21) qui sont montés de manière pivotante dans les fixations correspondantes (22).

FIG.2

FIG. 1